# EUROPÄISCHE PATENTSCHRIFT

(11) **EP 1 528 136 B1**
(45) Veröffentlichungstag und Bekanntmachung des Hinweises auf die Patenterteilung: **29.12.2010**
(21) Anmeldenummer: 04023746.3
(22) Anmeldetag: 06.10.2004
(51) Int. Cl.: D06F 37/26, D06F 23/02, B29C 45/14

(54) **Waschaggregat für eine Waschmaschine mit einem Laugenbehälter aus Kunststoff**
Washing unit for a washing machine with a plastic tub
Groupe de lavage pour une machine à laver avec une cuve en plastique

(30) Priorität: 29.10.2003 DE 10350793; 29.10.2003 DE 10350794
(43) Veröffentlichungstag der Anmeldung: 04.05.2005
(60) Teilanmeldung: 10007272.7
(73) Patentinhaber: Miele & Cie. KG, 33332 Gütersloh (DE)
(72) Erfinder: Eckert, Norbert, 33102 Paderborn (DE); Hollenhorst, Matthias, 59556 Lippstadt (DE); Kratzsch, Andreas, Dr., 33719 Bielefeld (DE); Krimpmann, Michael, 33378 Rheda-Wiedenbrück (DE); Maass, Heinz, 33378 Rheda-Wiedenbrück (DE); Mancini, Stefano, 60035 Jesi (Ancona) (IT); Nieder, Antje, 33332 Gütersloh (DE)

(56) Entgegenhaltungen:
- DE-A1- 4 011 653
- DE-A1- 4 041 324
- DE-A1- 10 216 517
- DE-A1- 19 911 139
- DE-A1- 19 960 501
- DE-U1- 8 622 028
- DE-U1- 29 821 140
- GB-A- 2 272 913

## Beschreibung

Die Erfindung betrifft ein Waschaggregat für eine Waschmaschine mit einem im wesentlichen hohlzylinderförmigen Laugenbehälter aus einem insbesondere glasfaserverstärkten Kunststoff, bestehend aus zwei Stirnflächen und einem Mantel, mit einer im Laugenbehälter angeordneten, um eine horizontale oder schräge Achse drehbaren, ebenfalls hohlzylindrischen Trommel, und mit einem Lagersitz zur fliegenden Lagerung der Trommel durch Aufnahme eines mit ihr verbundenen Wellenzapfens.

Waschmaschinen mit einem Waschaggregat, bei dem der Laugenbehälter aus Edelstahl-Blech hergestellt ist, sind beispielsweise aus der DE-OS 27 19 336 bekannt. Edelstahl-Laugenbehälter kommen auch bei den von der Anmelderin hergestellten und vertriebenen Waschmaschinen zum Einsatz. Zur fliegenden Lagerung der Trommel besitzen diese einen Wellenzapfen, welcher von zwei voneinander beabstandeten Lagern aufgenommen wird. Diese beiden Lager sind in einem hülsenförmigen Lagersitz angeordnet. Bei den vorgenannten Waschmaschinen dient zur Halterung und Befestigung des Lagersitzes am Laugenbehälter ein Tragkreuz aus Gusseisen. Trag- oder Lagerkreuz inklusive Lagersitz und Laugenbehälter werden als getrennte Bauteile hergestellt und nachträglich durch Schrauben oder Klemmringe verbunden.

Seit einiger Zeit wird bei der Herstellung von Laugenbehältern Kunststoff - meist glasfaserverstärkt - anstelle von Blech verwendet. Waschmaschinen mit Kunststoff-Laugenbehältern sind beispielsweise aus der EP 0 043 429 A1, der EP 0 374 519 A2 und der DE 298 21 140 U1 bekannt. Bei den bekannten Waschmaschinen ist es üblich, ein zylindrisches Lagergehäuse aus Metall (i. d. R. eine spanend bearbeitete Gusseisenkonstruktion) als Lagersitz zu verwenden und dieses bei der Herstellung des Laugenbehälter-Bodens mit Kunststoff zu umspritzen. Daneben ist es aus der DE 100 40 319 C1 bekannt, auf einen Lagersitz aus Metall zu verzichten und die Lager mit Kunststoff zu umspritzen. Varianten, bei denen wie beim Edelstahl-Laugenbehälter ein Tragkreuz separat gefertigt und am Laugenbehälter befestigt wird, sind nicht bekannt und nicht zweckmäßig, da die Koppelstellen aus nachstehend erläuterten Gründen sehr hoch belastet werden, was zu einem Reißen des Kunststoffs führen kann.

Die deutsche Offenlegungsschrift DE 199 60 501 A1 offenbart einen Laugenbehälter aus Kunststoff, der ein zylindrisches Lagergehäuse enthält. Dieses Lagergehäuse enthält einen zusätzlichen rotationssymmetrischen Kragen, der zur Aufnahme und Befestigung eines Stators für einen Direktantrieb dient. Die Umspritzung des Kunststoffs erstreckt sich hierbei jedoch nur bis zur äußeren Kante, bzw. des äußeren Endes des Kragens. Da dieses Lagergehäuse mit integriertem Statortragteil nur einen geringen Durchmesser aufweist, überträgt es sehr große Kräfte auf die Rückwand des Laugenbehälters, was mit hohem konstruktiven Aufwand, wie Verstärkungsrippen kompensiert werden muss. Auch die Wärmeableitung des Lagers ist nicht vorteilhaft gewährleistet, so dass es zu Temperaturspitzen bzw. starken Temperaturunterschieden innerhalb der Rückwand des Laugenbehälters kommen kann.

Bei den heute üblichen hohen Schleuderdrehzahlen von bis zu 1800 min-1 kommt es im Bereich der Lager durch Reibung zu einer Erhitzung auf Temperaturen um 100 °C. Die so erzeugte Wärmeenergie wird bei den bekannten Waschaggregaten mit Kunststoff-Laugenbehälter entweder über das Lagergehäuse oder direkt an den Laugenbehälter-Boden abgegeben. Dadurch kann es zu Materialschäden und zu einem Lockern der Verbindung zwischen Metall und Kunststoff kommen. Außerdem führen die hohen Drehzahlen bei Unwuchten, welche durch unsymmetrische Wäscheverteilung in der Trommel erzeugt werden, zu hohen Biegekräften, die über die Lager in den Laugenbehälter-Boden eingeleitet werden. Auch dies kann den Boden selbst oder seine Verbindung mit dem Lagergehäuse und mit dem Laugenbehältermantel schädigen.

Die deutsche Offenlegungsschrift DE 102 16 517 A1 offenbart ein Verfahren zur Herstellung eines Laugenbottichs aus Kunststoff. Hierbei werden mechanische Funktionsteile in die Spritzgussform eingelegt und durch Umspritzen am Laugenbottich angebracht. Zum genauen und zuverlässigen Positionierung von mechanischen Funktionsteilen sind jedoch weitere Maßnahmen notwendig.

Der Erfindung stellt sich somit das Problem, ein Waschaggregat für eine Waschmaschine mit einem Laugenbehälter aus Kunststoff zu offenbaren, bei welchem eine sichere Ableitung von Kräften und hohen Temperaturen aus dem Lagerbereich gewährleistet ist.

Erfindungsgemäß wird dieses Problem durch ein Waschaggregat mit den Merkmalen des unabhängigen Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer guten Wärme- und Kraftableitung aus dem Bereich der Lager in einer Erhöhung der Festigkeit des Laugenbehälter-Bodens. Hierdurch kann auf die bei Serien-Waschmaschinen mit Kunststoff-Laugenbehältern üblichen Versteifungsstreben verzichtet werden, was zu einer Materialeinsparung führt. Außerdem kann die aus der EP 0 043 429 A1 bekannte, bei Serien-Waschmaschinen ebenfalls übliche Versteifung des Bodens durch unterschiedlich tiefe Sektoren entfallen und in einer vorteilhaften Ausführungsform die zum Laugenbehälterinneren gerichtete Seite der Stirnfläche annähernd eben ausgebildet werden. Hierdurch werden Geräusche vermieden, die bei der Bewegung der Waschflotte in den durch die tieferen Sektoren gebildeten Taschen entstehen.

In der erfindungsgemäßen Ausführungsform besitzt die Tragkontur im Einbauzustand mehrere radial verlaufende Arme, bezogen auf die Fläche des Laugenbehälter-Bodens, wobei zwischen jeweils zwei benachbarten Armen der Tragkontur an ihren Enden zwei erste Verbindungsstreben aus Metall, vorzugsweise aus Gusseisen, angeordnet sind.

In einer weiteren zweckmäßigen Ausführungsform verlaufen die Arme der Tragkontur im Einbauzustand jeweils diagonal.

Hierdurch wird die Stabilität des Laugenbehälter-Bodens weiter erhöht und die Möglichkeit der Temperaturableitung weiter verbessert. Außerdem erfolgt hierdurch eine optimale Verteilung von Masse zur dynamischen Kompensation von Unwuchtkräften. Es ist zweckmäßig, die ersten Verbindungsstreben jeweils zwischen den Enden der beiden oberen Arme der Tragkontur und zwischen den Enden der beiden unteren Arme der Tragkontur verlaufen zu lassen.

Eine weitere Erhöhung der Steifigkeit des Bodens erfolgt dadurch, dass die Arme der Tragkontur im Endbereich Verzweigungen aufweisen, was noch dadurch verbessert wird, dass zwischen den Enden der Verzweigungen zweite Verbindungstreben aus Metall, vorzugsweise aus Gusseisen angeordnet sind.

In einer weiteren vorteilhaften Ausführungsform sind zwischen den beiden linken Armen und zwischen den beiden rechten Armen der Tragkontur jeweils in deren Mittelbereich dritte Verbindungsstreben aus Metall, vorzugsweise aus Gusseisen angeordnet. Durch die einwärts gerichtete Anordnung dieser Verbindungsstreben können mehrere ineinandergeschachtelte Tragkonturen mit einem einzigen Anguss gefertigt werden.

Ein Ausführungsbeispiel der Erfindung ist in den Zeichnungen rein schematisch dargestellt und wird nachfolgend näher beschrieben. Es zeigen
- Figur 1: die perspektivische Rückansicht eines Laugenbehälters (1) mit integrierter Tragkontur;
- Figur 2: die Tragkontur als Einzelheit;
- Figur 3: einen Schnitt durch die Seitenansicht des Laugenbehälters (1);
- Figur 4: die perspektivische Vorderansicht des Laugenbehälters (1);
- Figur 5: die Lageranordnung eines Waschaggregats für eine Waschmaschine in der Seitenansicht im Schnitt und
- Figur 6 + 7: eine Detailansicht der Abflussbohrungen in der Seitenansicht im Schnitt.

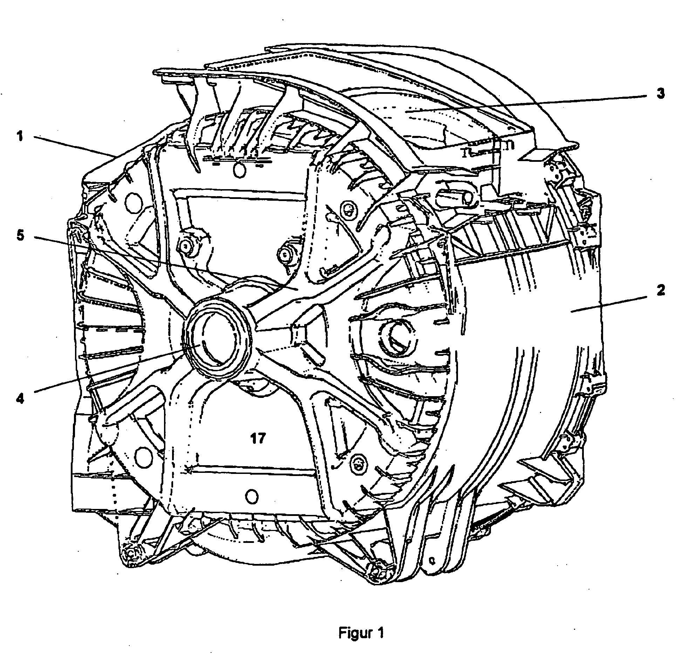

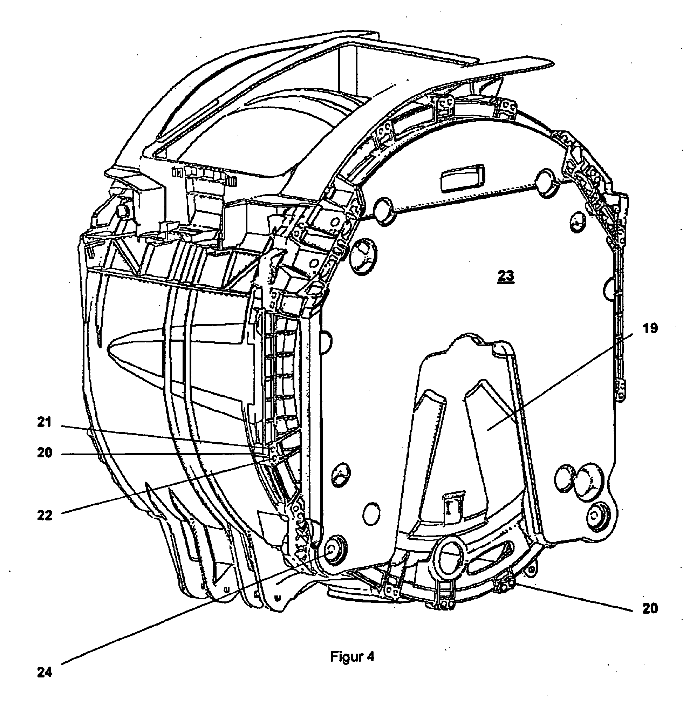

Der in Figur 1 dargestellte Laugenbehälter (1) kommt in dem Waschaggregat einer mantelbeschickbaren Waschmaschine, einem sogenannten Toplader zum Einsatz. Aus diesem Grund ist der Laugenbehältermantel (2) mit einer Öffnung (3) versehen, welche mit der Öffnung im Mantel einer in den Zeichnungen nicht dargestellten Trommel korrespondiert. Bei Verwendung des Laugenbehälters im Waschaggregat einer frontbeschickbaren Waschmaschine, einem sogenannten Frontlader, ist die Öffnung in der vorderen Deckfläche angeordnet (beim Toplader geschlossen, s. Figur 4).

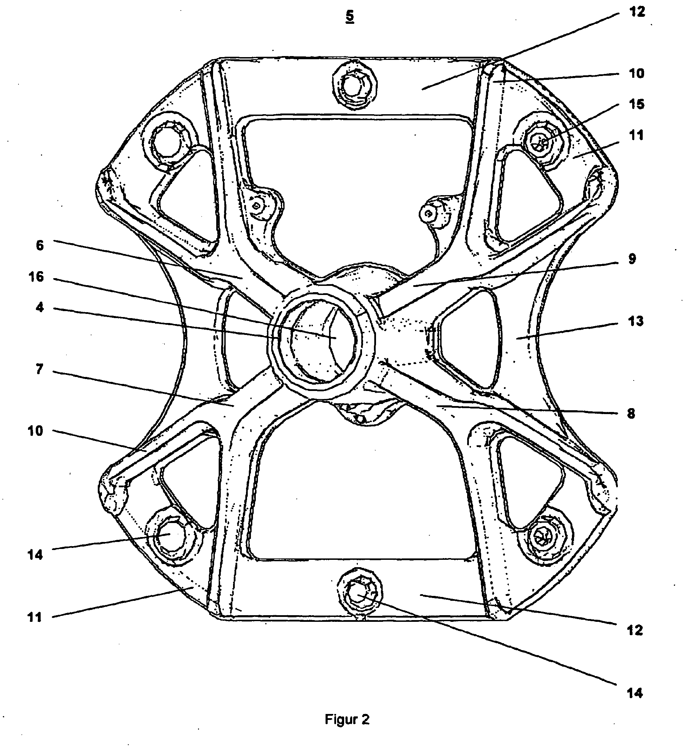

Zur fliegenden Lagerung besitzt die Trommel in bekannter Weise einen Wellenzapfen, welcher von zwei voneinander beabstandeten Lagern aufgenommen wird (nicht dargestellt). Diese beiden Lager sind in einem hülsenförmigen Lagersitz (4) angeordnet, welcher sich im Zentrum einer in Figur 2 dargestellten Tragkontur (5) befindet. Die Tragkontur (5) besitzt zumindest einen oder mehrere radial verlaufende Arme, wobei in einer vorteilhaften Ausführungsform die Tragkontur (5) vier Arme (6, 7, 8, 9) besitzt, von denen im Einbauzustand jeweils zwei diagonal verlaufen. Im Endbereich weisen alle vier Arme (6, 7, 8, 9) Verzweigungen (10) auf, deren Enden jeweils durch radial nach außen gekrümmte Streben (11) miteinander verbunden sind. Darüber hinaus sind auch die beiden oberen Arme (6, 9) und die beiden unteren Arme (7, 8) jeweils durch gerade Streben (12) verbunden. Zwischen den beiden linken Armen (6, 7) und den beiden rechten Armen (8, 9) sind nach innen gekrümmte Streben (13) angeordnet. Auf diese Weise wird durch die Streben (11, 12, 13) der geschlossene Umfang der Tragkontur (5) gebildet, welcher durch zwei jeweils diagonal verlaufende Armpaare (6, 8 bzw. 7, 9) geschnitten wird und im Zentrum den Lagersitz (4) trägt. Die Streben 11 und 12 und die beiden oberen Arme (6, 9) sind mit Lageransätzen (14) oder Zentrieransätzen (15) versehen deren Funktion später erklärt ist. Die gesamte Tragkontur (5) wird als einstückiges Formteil aus Gusseisen hergestellt. Im Bereich der Bohrung (16), die den Lagersitz (4) bildet, erfolgt nach dem Gießen eine spanende Bearbeitung, um die Passung für die Lager genau zu definieren.

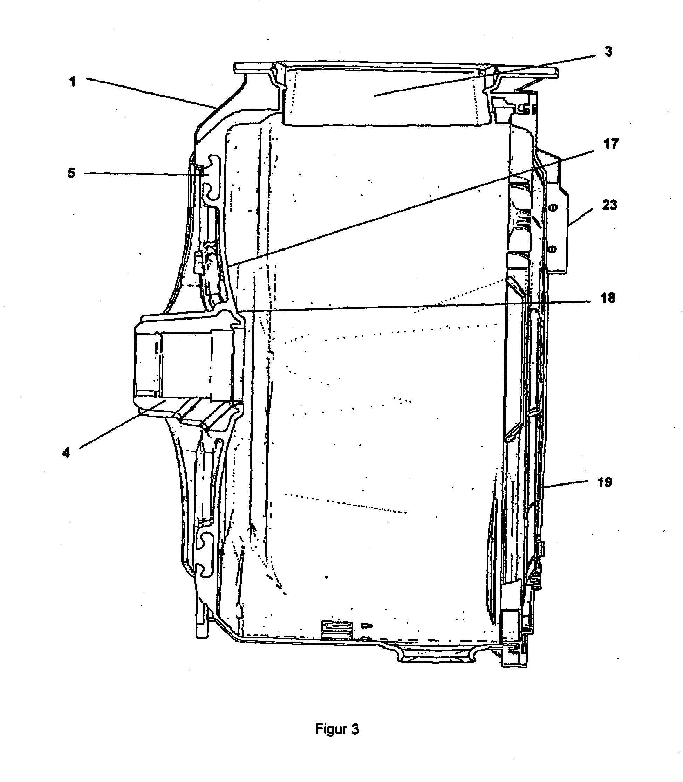

Die vorbeschriebene Tragkontur (4) wird in eine Spritzgussform (nicht dargestellt) eingelegt. Zur lagegenauen Fixierung wird die Bohrung (16) auf einen Dorn (nicht dargestellt) gesteckt, die Zentrieransätze (15) dienen zur winkelgenauen Fixierung und die Lageransätze (14) verhindern ein Kippen der Kontur (5) in der Form. Anschließend wird die Form nahezu vollständig mit einem glasfaserverstärkten Kunststoff umspritzt, nur die Lager- und Zentrieransätze und die Bohrung (16) bleiben frei. Auf diese Weise wird ein einstückiger Bottich hergestellt, welcher den Mantel (2) und als erste Stirnfläche den Boden (17) des Laugenbehälters (1) bildet, wobei die Kontur (5) vollständig bis auf die vorgenannten Ausnahmen in das Material des Bodens (17) eingebettet ist. Figur 3 zeigt in einem Schnitt die Einbettung der Kontur (5). Hier ist außerdem zu sehen, dass die Innenfläche des Bodens (17) bis auf eine Auswölbung (18) im Bereich des Lagersitzes (4) eben ist.

Der Bottich wird durch eine in Figur 4 dargestellte Frontkappe (19), die dann die zweite Stirnfläche bildet, zu einem Laugenbehälter (1) komplettiert. Zur gegenseitigen Befestigung der beiden Teile sind Schraubdome (20) vorgesehen. Dabei hat es sich als vorteilhaft erwiesen, für jede Befestigungsstelle Dome (20) mit zwei Gewindebohrungen (21, 22) vorzusehen. Hierdurch ist auch nach einer Beschädigung des Gewindes (21) in einem Dorn (20) - etwa nach mehrmaligem Lösen der Schrauben - eine sichere und dichte Verbindung von Bottich und Frontkappe durch Verwendung des zweiten Gewindes (22) möglich.

An der Frontkappe (19) ist ein hufeisenförmiges Ausgleichsgewicht (23), vorteilhafterweise auch aus Gusseisen hergestellt, über weitere Schraubdome (24) befestigt. In einer in den Zeichnungen nicht dargestellten Ausführungsform kann anstatt des geteilten Aufbaus das Ausgleichsgewicht ähnlich wie die Tragkontur umspritzt werden und so von dem Material der Frontkappe eingebettet werden. Hierdurch entfällt die separate Befestigung.

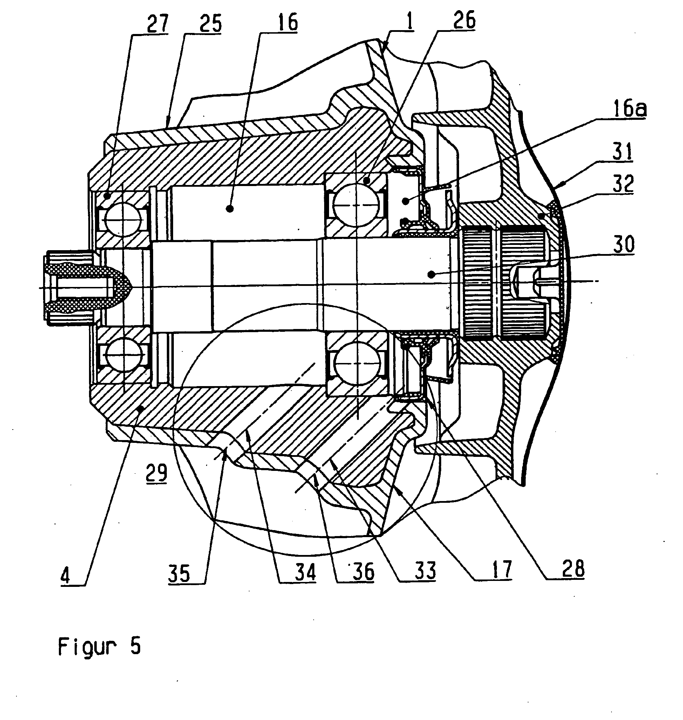

Ein weiteres Ausführungsbeispiel der Erfindung ist in der Figur 5 rein schematisch dargestellt und wird nachfolgend näher beschrieben. Die Figur 5 zeigt die Lageranordnung eines Waschaggregats für eine Waschmaschine in der Seitenansicht im Schnitt. Das Waschaggregat besitzt einen im Wesentlichen zylindrischen Laugenbehälter (1) und eine darin drehbar gelagerte, ebenfalls zylindrische Trommel (31) zur Aufnahme der Wäsche (nicht dargestellt). Der Laugenbehälter (1) ist aus laugenbeständigem Kunststoff hergestellt und besitzt im Zentrum seines Bodens (17) eine Öffnung (16), hinter der ein Lagergehäuse (4) angeordnet ist. Letzteres wird von einem nicht dargestellten Lagerkreuz getragen. Die Verbindung von Lagerkreuz und Lagergehäuse (4) mit dem Laugenbehälter (1) ist ein Teil des an späterer Stelle beschriebenen Herstellungsverfahrens. Ein mit der Trommel (31) über einen Flansch (32) verbundener Wellenzapfen (30) ist durch die Öffnung (16) hindurch geführt. Die Lagerung für die Trommel besteht aus einem vorderen und einem hinteren Radialkugellager (26, 27), die durch Presspassung in der Aufnahmebohrung (16) des Lagergehäuses (4) fixiert sind und den Wellenzapfen (30) aufnehmen. Das vordere Lager (26) wird durch einen Radialwellendichtring (28) geschützt, der in die vor dem Lagergehäuse (4) befindliche Öffnung (16a) des Laugenbehälterbodens (17) eingesetzt ist. Im Lagergehäuse (4) befinden sich zwei durchgängige Abflussbohrungen (33, 34), von denen die eine (33) im Bereich des Radialwellendichtrings (28) und die andere (34) zwischen den beiden Lagern (27, 28) in die Aufnahmebohrung (16) mündet.

Zur Herstellung des Laugenbehälters wird zunächst das Lagergehäuse (4) mit den beiden Abflussbohrungen (33, 34) versehen. Anschließend wird die Kontur (5) als Einheit, aus Lagerkreuz und Lagergehäuse in die Kavität eines Spritzgießwerkzeugs (nicht dargestellt) eingelegt, welche die Außenkontur eines Bottichs bestimmt. Dieser Bottich besteht aus dem Mantel (2) und dem Boden (17) des Laugenbehälters (1). Zur lagegenauen Fixierung wird die Aufnahmebohrung (16) auf einen Dorn (nicht dargestellt) gesteckt. In die beiden Abflussbohrungen (33, 34) im Lagergehäuse (4) werden zwei Kerne (nicht dargestellt) gefahren, deren Enden aus dem dem Radialwellendichtring (28) gegenüberliegenden Ende herausragen. Anschließend werden Lagergehäuse (4), Kerne und Lagerkreuz mit einer polymeren Masse aus glasfaserverstärkten Kunststoff umspritzt, nur die Aufnahmebohrung (16) bleibt frei. Auf diese Weise wird der Bottich einstückig hergestellt. Nachdem die eingespritzte polymere Masse (Schmelze) erstarrt ist, wird der vordere und der hintere Kern mit einem Schieber aus der jeweiligen Abflussbohrung (33, 34) herausgezogen und es entstehen in dem das Lagergehäuse (4) umgebenden Kunststoffmantel (25) zwei freie Durchflüsse (35, 36). Hierüber kann angesammeltes Kondenswasser aus der Bohrung (16) in den Außenbereich (29) des Lagergehäuses (4) abgeleitet werden.

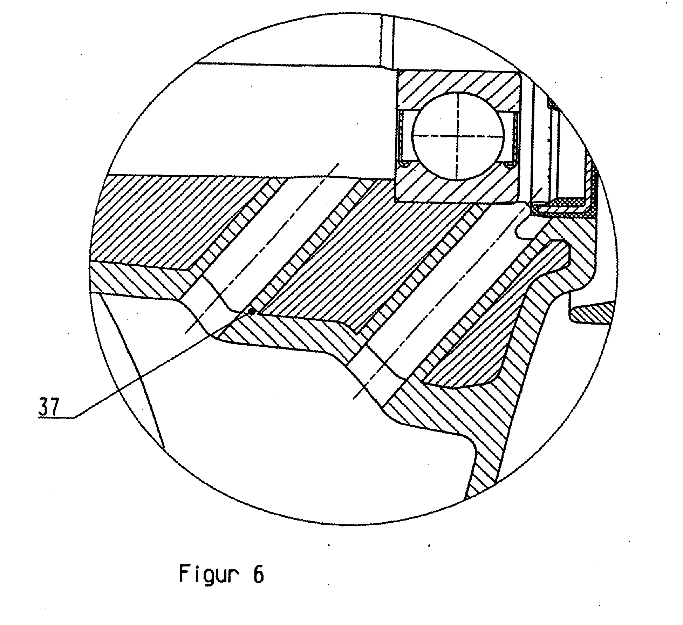

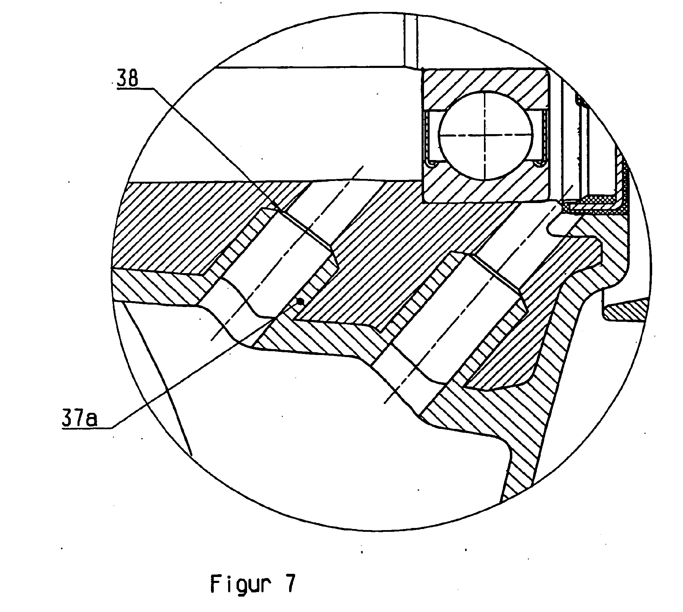

Zur weiteren vorteilhaften Ausgestaltung der Bohrung kann, wie in der Figur 6 dargestellt, die Innenwandung der Bohrung (33, 34) ebenfalls mit Kunststoff (37) überzogen werden. Hierbei hat der Kern einen geringeren Durchmesser, als die Bohrung (33, 34), wobei die Dicke des Kunststoffüberzugs aus der halben Differenz zwischen dem Durchmesser der Bohrung (33, 34) im Lagergehäuse und dem Durchmesser des Kerns bestimmt bzw. festgelegt wird. In Figur 7 ist eine weitere vorteilhafte Ausgestaltung der Bohrung (33, 34) dargestellt, in der die Innenwandung nur in einem Teilbereich mit Kunststoff (37 a) überzogen ist. Hierbei hat die Bohrung (33, 34) im Lagergehäuse in einem vorderen Bereich einen ersten Durchmesser und in einem hinteren Bereich einen zweiten Durchmesser, wobei der erste Durchmesser größer ist, als der zweite Durchmesser. Der Kern wird nur in den ersten Bereich der Bohrung (33, 34) eingeführt und dichtet an dem Versatz (38) zum hinteren Bereich der Bohrung ab. Hierbei hat der Kern einen geringeren Durchmesser, als die Bohrung (33, 34) im ersten Bereich, wobei sich die Dicke des Kunststoffüberzugs aus der halben Differenz zwischen dem ersten Durchmesser der Bohrung (33, 34) im Lagergehäuse und dem Durchmesser des Kerns ergibt.

## Patentansprüche

1. Waschaggregat für eine Waschmaschine mit einem im wesentlichen hohlzylinderförmigen Laugenbehälter (1) aus einem insbesondere glasfaserverstärkten Kunststoff, bestehend aus zwei Stirnflächen (17, 19) und einem Mantel (2), mit einer im Laugenbehälter (1) angeordneten, um eine horizontale oder schräge Achse drehbaren, ebenfalls hohlzylindrischen Trommel, und mit einem im Bereich einer Stirnfläche (17) angeordneten, aus Metall, vorzugsweise aus Gusseisen gefertigten Tragkontur (5), in deren Zentrum ein Lagersitz (4) zur fliegenden Lagerung der Trommel durch Aufnahme eines mit ihr verbundenen Wellenzapfens angeordnet ist, wobei die Tragkontur (5) wenigstens annähernd vollständig in das Material einer Stirnfläche (17) eingebettet ist und die Tragkontur (5) ein einstückiges Formteil ist,
**dadurch gekennzeichnet,**
**dass** die Tragkontur (5) mehrere radial verlaufende Arme (6, 7, 8 , 9) besitzt und dass zwischen jeweils zwei benachbarten Armen der Tragkontur (5) an ihren Enden Verbindungsstreben (12) aus Metall, vorzugsweise aus Gusseisen angeordnet sind.

2. Waschaggregat nach Anspruch 1,
**dadurch gekennzeichnet,**
**dass** die zum Laugenbehälterinneren gerichtete Seite der Stirnfläche (17) annähernd eben ausgebildet ist.

3. Waschaggregat nach Anspruch 1,
**dadurch gekennzeichnet,**
**dass** die Tragkontur (5) vier diagonal verlaufende Arme (6, 7, 8, 9) besitzt.

4. Waschaggregat nach Anspruch 1
**dadurch gekennzeichnet,**
**dass** die ersten Verbindungsstreben (12) jeweils zwischen den Enden der beiden oberen Arme (6, 9) der Tragkontur (5) und zwischen den Enden der beiden unteren Arme (7, 8) der Tragkontur (5) verlaufen.

5. Waschaggregat nach mindestens einem der Ansprüche 1, 3 bis 4,
**dadurch gekennzeichnet,**
**dass** die Arme (6, 7, 8, 9) der Tragkontur (5) im Endbereich Verzweigungen (10) aufweisen.

6. Waschaggregat nach Anspruch 5,
**dadurch gekennzeichnet,**
**dass** zwischen den Enden der Verzweigungen (10) zweite Verbindungsstreben (12) aus Metall, vorzugsweise aus Gusseisen angeordnet sind.

7. Waschaggregat nach mindestens einem der Ansprüche 1, 3 bis 6,
**dadurch gekennzeichnet,**
**dass** zwischen den beiden linken Armen (6, 7) und zwischen den beiden rechten Armen (8, 9) der Tragkontur (5) jeweils in deren Mittelbereich dritte Verbindungsstreben (13) aus Metall, vorzugsweise aus Gusseisen angeordnet sind.

8. Waschaggregat nach Anspruch 1,
**dadurch gekennzeichnet,**
**dass** die die Tragkontur (5) enthaltende Stirnfläche (17) und der Mantel (3) des Laugenbehälters einstückig hergestellt sind.

9. Waschaggregat nach Anspruch 1,
**dadurch gekennzeichnet,**
**dass** die die Tragkontur (5) nicht enthaltende Stirnfläche (19) mindestens ein mit einem glasfaserverstärkten Kunststoff umspritztes Ausgleichsgewicht (23) umfasst, das wenigstens annähernd vollständig in das Material der Stirnfläche eingebettet ist(sind).

10. Waschaggregat nach Anspruch 1,
**gekennzeichnet durch** mindestens einer Abflussbohrung (33) im Lagergehäuse (4), welche im Bereich der Dichtungsanordnung (28) in die Aufnahmebohrung (16) mündet.

11. Waschaggregat nach Anspruch 1,
**gekennzeichnet durch** eine weitere Abflussbohrung (34) im Lagergehäuse (4), welche in den Bereich zwischen den Radial-Wälzlagern (27, 26) in die Aufnahmebohrung (16) mündet.

12. Waschaggregat nach Anspruch 10 oder 11,
**dadurch gekennzeichnet,**
**dass** die Innenwandung der Bohrung (33, 34) im Lagergehäuse (4) mit Kunststoff überzogen ist.

## Claims

1. Washing unit for a washing machine comprising a suds container (1) substantially in the shape of a hollow cylinder and made from an in particular glass fibre reinforced plastics material, consisting of two end faces (17, 19) and a skirt (2), comprising a drum which is also in the shape of a hollow cylinder and is arranged in the suds container (1) such that it can be rotated about a horizontal or oblique axis, and comprising a supporting contour (5) produced from metal, preferably from cast iron, arranged in the region of one end face (17), in the centre of which supporting contour a bearing seat (4) is arranged for the cantilever mounting of the drum by receiving a shaft journal connected thereto, the supporting contour (5) being embedded in the material of one end face (17) at least approximately completely, and the supporting contour (5) being a single-piece moulded part,
**characterised in that**
the supporting contour (5) has a plurality of radially extending arms (6, 7, 8 , 9) and **in that** connecting struts (12) made of metal, preferably of cast iron, are arranged between two adjacent arms of the supporting contour (5) in each case, on the ends of said arms.

2. Washing unit according to claim 1,
**characterised in that**
the side of the end face (17) facing the interior of the suds container is formed so as to be approximately planar.

3. Washing unit according to claim 1,
**characterised in that**
the supporting contour (5) has four diagonally extending arms (6, 7, 8, 9).

4. Washing unit according to claim 1,
**characterised in that**
the first connecting struts (12) extend between the ends of the two upper arms (6, 9) of the supporting contour (5) and between the ends of the two lower arms (7, 8) of the supporting contour (5) in each case.

5. Washing unit according to at least one of claims 1, 3 or 4,
**characterised in that**
the arms (6, 7, 8, 9) of the supporting contour (5) comprise branches (10) in the end region.

6. Washing unit according to claim 6,
**characterised in that**
second connecting struts (12) made of metal, preferably of cast iron, are arranged between the ends of the branches (10).

7. Washing unit according to at least one of claims 1 or 3 to 6,
**characterised in that**
third connecting struts (13) made of metal, preferably of cast iron, are arranged between the two left arms (6, 7) and between the two right arms (8, 9) of the supporting contour (5), in the central region thereof in each case.

8. Washing unit according to claim 1,
**characterised in that**
the end face (17), which comprises the supporting contour (5), and the skirt (3) of the suds container are produced in one piece.

9. Washing unit according to claim 1,
**characterised in that**
the end face (19) which does not comprise the supporting contour (5) comprises at least one balancing weight (23) coated with a glass fibre reinforced plastics material which is/are embedded in the material of the end face at least approximately completely.

10. Washing unit according to claim 1,
**characterised by** at least one outlet hole (33) in the bearing housing (4), which outlet hole discharges into the receiving hole (16) in the region of the sealing arrangement (28).

11. Washing unit according to claim 1,
**characterised by** a further outlet hole (34) in the bearing housing (4), which further outlet hole discharges into the receiving hole (16) in the region between the radial rolling bearings (27, 26).

12. Washing unit according to either claim 10 or claim 11,
**characterised in that**
the inner wall of the hole (33, 34) in the bearing housing (4) is coated with plastics material.

## Revendications

1. Groupe de lavage pour une machine à laver avec une cuve de lessivage (1) essentiellement en forme de cylindre creux réalisée dans une matière plastique en particulier renforcée de fibre de verre, composée de deux faces avant (17, 19) et d'une enveloppe (2), avec un tambour, également cylindrique et creux, disposé dans la cuve de lessivage (1), rotatif autour d'un axe horizontal ou oblique, et avec un contour porteur (5), disposé dans la zone d'une face avant (17), fabriqué en métal, de préférence en fonte, au centre duquel est disposé un palier (4) pour supporter en porte-à-faux le tambour en logeant un tourillon d'arbre qui lui est relié, le contour porteur (5) étant noyé au moins approximativement complètement dans le matériau d'une face avant (17), et le contour porteur (5) étant un profilé d'une pièce,
**caractérisé en ce que**
le contour porteur (5) possède plusieurs bras (6, 7, 8, 9) disposés de façon radiale, et **en ce que** des nervures de renfort (12) en métal, de préférence en fonte, sont disposées entre respectivement deux bras voisins du contour porteur (5) au niveau de leurs extrémités.

2. Groupe de lavage selon la revendication 1,
**caractérisé en ce que**
le côté de la face avant (17) dirigé vers l'intérieur de la cuve de lessivage est constitué de façon approximativement plane.

3. Groupe de lavage selon la revendication 1,
**caractérisé en ce que**
le contour porteur (5) possède quatre bras (6, 7, 8, 9) disposés en diagonale.

4. Groupe de lavage selon la revendication 1,
**caractérisé en ce que**
les premières nervures de renfort (12) sont disposées respectivement entre les extrémités des deux bras supérieurs (6, 9) du contour porteur (5) et entre les extrémités de deux bras inférieurs (7, 8) du contour porteur (5).

5. Groupe de lavage selon au moins une des revendications 1, 3 à 4 **caractérisé en ce que**
les bras (6, 7, 8, 9) du contour porteur (5) présentent des ramifications (10) dans la zone d'extrémité.

6. Groupe de lavage selon la revendication 5,
**caractérisé en ce que**,
entre les extrémités des ramifications (10), sont disposées des deuxièmes nervures de renfort (12) en métal, de préférence en fonte.

7. Groupe de lavage selon au moins une des revendications 1, 3 à 6
**caractérisé en ce que**,
entre les deux bras gauches (6, 7) et entre les deux bras droits (8, 9) du contour porteur (5), sont disposées des troisièmes nervures de renfort (13) en métal, de préférence en fonte, respectivement dans sa zone moyenne.

8. Groupe de lavage selon la revendication 1,
**caractérisé en ce que**
la face avant (17) contenant le contour porteur (5) et l'enveloppe (3) de la cuve de lessivage sont réalisées d'une seule pièce.

9. Groupe de lavage selon la revendication 1,
**caractérisé en ce que**
la face avant (19) ne contenant pas le contour porteur (5) comprend au moins un contrepoids (23) enrobé de matière plastique renforcée de fibre de verre qui est/sont noyé(s) approximativement complètement dans le matériau de la face avant.

10. Groupe de lavage selon la revendication 1,
**caractérisé par** au moins un alésage d'écoulement (33) dans le logement de palier (4) qui débouche dans l'alésage d'admission (16) dans la zone du dispositif d'étanchéité (28).

11. Groupe de lavage selon la revendication 1,
**caractérisé par** un autre alésage d'écoulement (34) dans le logement de palier (4) qui débouche dans l'alésage d'admission (16) dans la zone entre les roulements radiaux (27, 26).

12. Groupe de lavage selon la revendication 10 ou 11,
**caractérisé en ce que**
la paroi intérieure de l'alésage (33, 34) dans le logement de palier (4) est revêtue de matière plastique.
